# EUROPEAN PATENT APPLICATION

(11) **EP 2 407 372 A1**
(43) Date of publication of application: **18.01.2012**
(21) Application number: 10394013.6
(22) Date of filing: 14.07.2010
(51) Int. Cl.: B62J 6/00, B62M 3/06

(54) **Illuminight indicators**

(71) Applicant: Clare, Richard, Rush Dublin (IE); Burns, Joseph, Rush Dublin (IE)
(72) Inventor: Clare, Richard, Rush Dublin (IE); Burns, Joseph, Rush Dublin (IE)

(57) **Abstract**

The Illuminight indicators consist of (B) 12 volt, rechargeable battery, (OFS) on-off switch, (FU) flashing unit and (CU) charging unit, all contained in a (CB) control box. There are two (P) positive wires connected to the (PS) positive side off the (B) battery. One is from the (OFS) on -off switch and one from the (NS) charging unit. There are two (N) negative wires connected to the (NS) negative side of the battery, from the works inside the (CB) control box. One which is from the (OFS) on-off switch which continues to the (FU) the flashing unit, one from the (CU) charging unit. The (N) negative wire which is connected a point on the (FU) flashing unit proceeds and is connected to the centre point in the (IS) indicator switch.

The (RRI) right rear indicator is connected by a (P) positive wire to one connected point and by a (N) negative wire to the other connection point. Both the (P) positive wire and the (N) negative wire proceed to entrance in (CB) control box.

The (RFI) right front indicator is connected by a (P) positive wire to one connection point and by a (N) negative wire to the other connection point. Both the (P) positive wire and (N) negative wire proceed to the (IS) indicator switch. The (P) positive wire is connected to right connection point in the (IS) indicator switch. The (N) negative wire will be (C) caped.

The (LFI) left rear indicator is connected by the (P) positive wire to one connection point by the (N) negative wire to the other connection point. Both the (P) positive wire and (N) negative wire proceed to entrance in (CB) control box.

The (LFI) left front indicator is connected by the (P) positive wire to one connection point and by the (N) negative wire to the other connection point. Both the (P) positive wire and (N) negative wire proceed to the (IS) indicator switch. The (P) positive wire is connected to the left connection point in the (IS) indicator switch. (N) Negative wire will be (C)caped.

The two (P) positive wires which are already connected in the (IS) indicator switch are joined by two more (P) positive wires and the two (N) negative wires there are now four (N) negative wires in the (IS) indicator switch. They are all joined together and (C) caped. One (P) positive wire joins the (P) positive wire, which is connected to the right connection point in the (IS) indicator switch. The other (P) positive wire joins the (P) positive wire, which is connected to the left connection point in the (IS) indicator switch.

Two (P) positive wires and two (N) negative wires from the (IS) indicator switch proceed to (CB) control box. The (P) positive wire from the (RRI) right rear indicator joins the (P) positive wire from the right connection point in the (IS) indicator switch and are (C) caped in the (CB) control box. The (P) positive wire from the (LRI) left rear indicator joins the (P) positive wire from the left connection point in the (IS) indicator switch and are (C) caped in the (CB) control box. The two (N) negative wires from the (IS) indicator switch and the two (N) negative wires, one from (RRI) right rear indicator and one from (LRI) left rear indicator, are connected to the (N) negative point of the (B) battery.

All 12 watt bulbs contained in indicators are no (20) and all brackets are no (21). PN= Positive and negative wires combined.

## Description

The illuminight indicators consist of (B) 12 volt, rechargeable battery, (OFS) on-off switch, (FU) flashing unit and (CU) charging unit, all contained in a (CB) control box. There are two (P) positive wires connected to the (PS) positive side off the (B) battery. One is from the (OFS) on -off switch and one from the (NS) charging unit. There are two (N) negative wires connected to the (NS) negative side of the battery, from the works inside the (CB) control box. One which is from the (OFS) on-off switch which continues to the (FU) the flashing unit, one from the (CU) charging unit. The (N) negative wire which is connected a point on the (FU) flashing unit proceeds and is connected to the centre point in the (IS) indicator switch.

The (RRI) right rear indicator is connected by a (P) positive wire to one connected point and by a (N) negative wire to the other connection point. Both the (P) positive wire and the (N) negative wire proceed to entrance in (CB) control box.

The (RFI) right front indicator is connected by a (P) positive wire to one connection point and by a (N) negative wire to the other connection point. Both the (P) positive wire and (N) negative wire proceed to the (IS) indicator switch. The (P) positive wire is connected to right connection point in the (IS) indicator switch. The (N) negative wire will be (C) caped.

The (LFI) left rear indicator is connected by the (P) positive wire to one connection point by the (N) negative wire to the other connection point. Both the (P) positive wire and (N) negative wire proceed to entrance in (CB) control box.

The (LFI) left front indicator is connected by the (P) positive wire to one connection point and by the (N) negative wire to the other connection point. Both the (P) positive wire and (N) negative wire proceed to the (IS) indicator switch. The (P) positive wire is connected to the left connection point in the (IS) indicator switch. (N) Negative wire will be (C)caped.

The two (P) positive wires which are already connected in the (IS) indicator switch are joined by two more (P) positive wires and the two (N) negative wires there are now four (N) negative wires in the (IS) indicator switch. They are all joined together and (C) caped. One (P) positive wire joins the (P) positive wire, which is connected to the right connection point in the (IS) indicator switch. The other (P) positive wire joins the (P) positive wire, which is connected to the left connection point in the (IS) indicator switch.

Two (P) positive wires and two (N) negative wires from the (IS) indicator switch proceed to (CB) control box. The (P) positive wire from the (RRI) right rear indicator joins the (P) positive wire from the right connection point in the (IS) indicator switch and are (C) caped in the (CB) control box. The (P) positive wire from the (LRI) left rear indicator joins the (P) positive wire from the left connection point in the (IS) indicator switch and are (C) caped in the (CB) control box. The two (N) negative wires from the (IS) indicator switch and the two (N) negative wires, one from (RRI) right rear indicator and one from (LRI) left rear indicator, are connected to the (N) negative point of the (B) battery.

All 12 watt bulbs contained in indicators are no (20) and all brackets are no (21).

PN= Positive and negative wires combined.

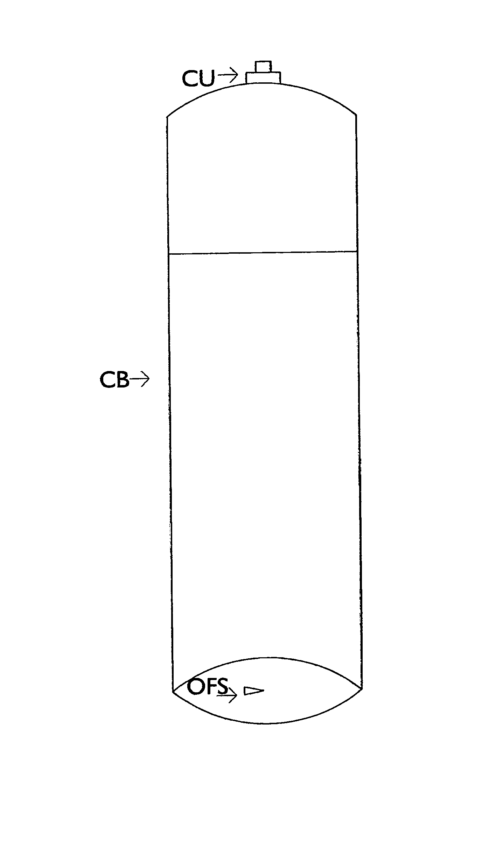

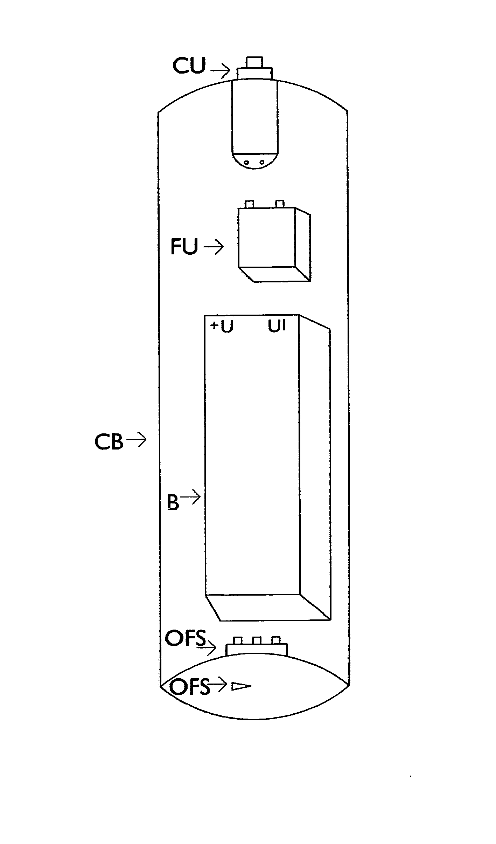

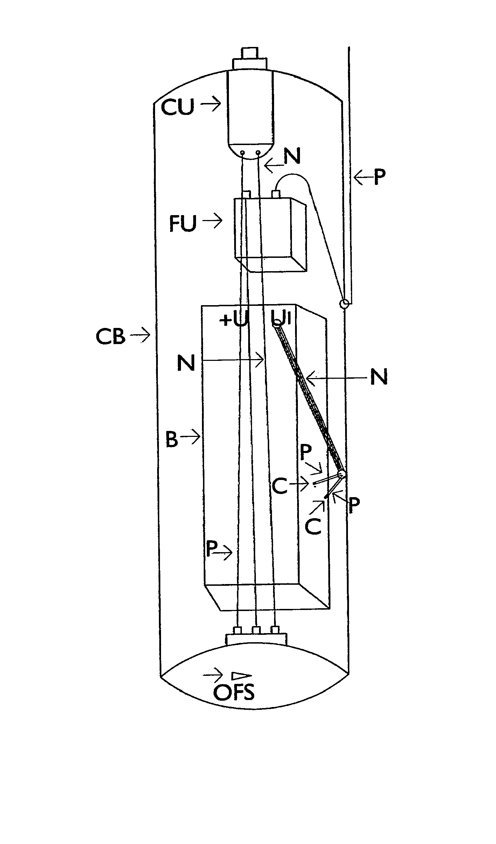

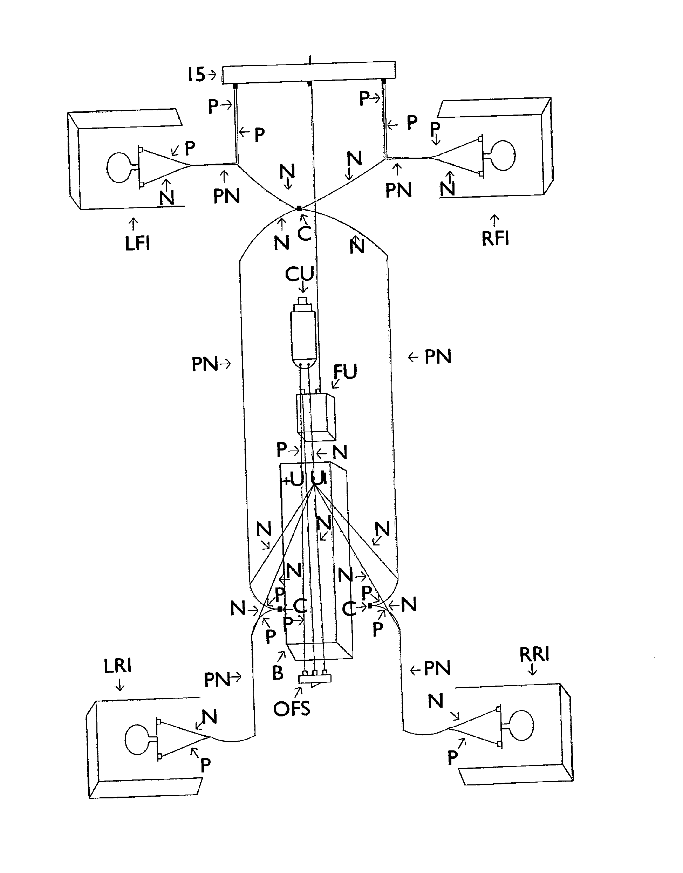

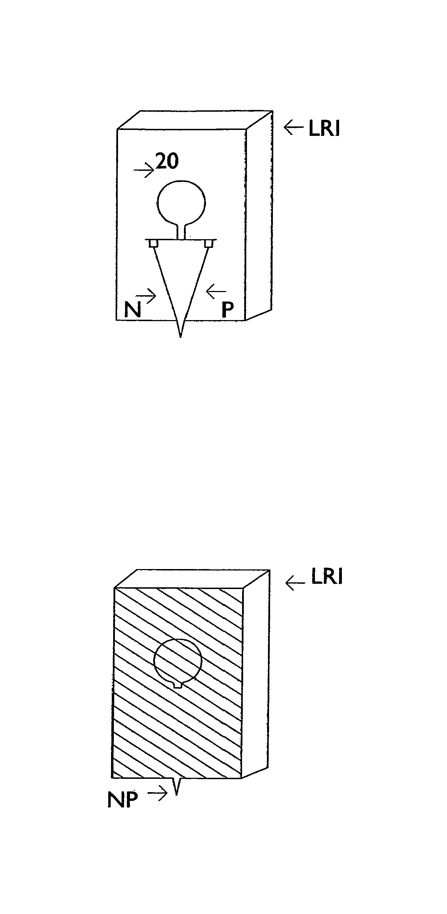

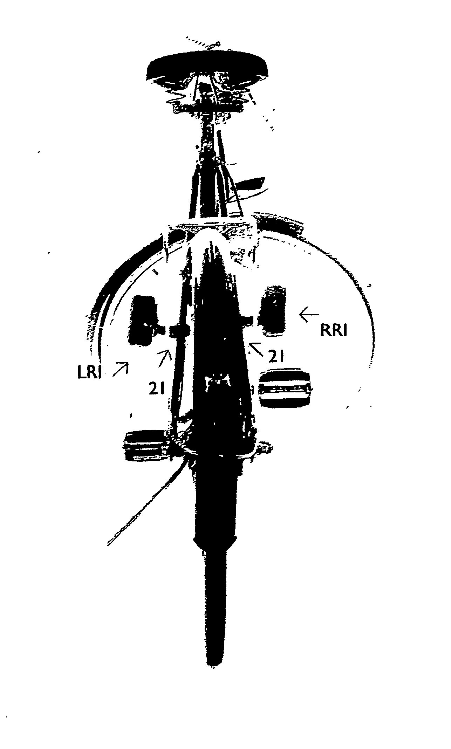

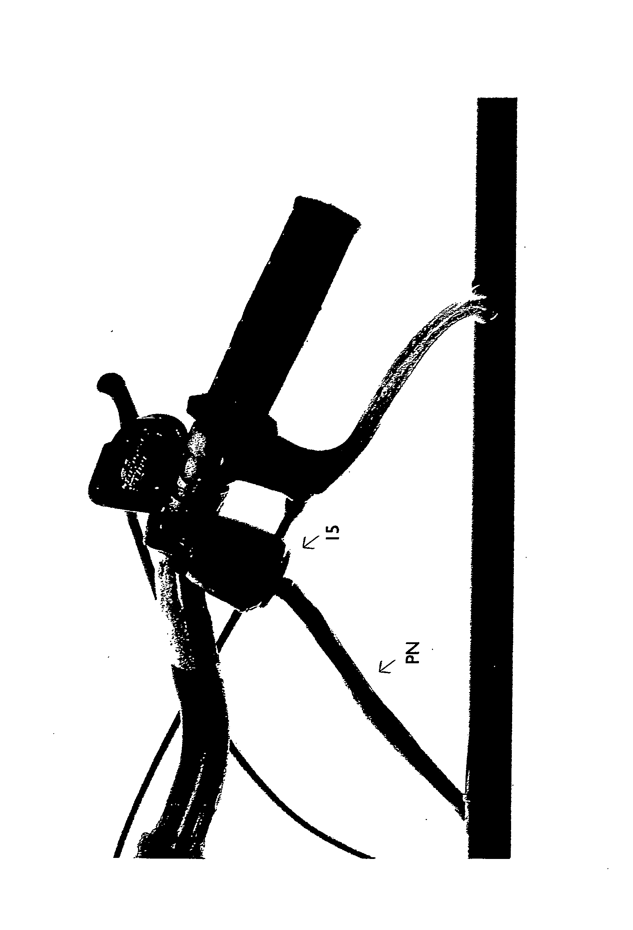

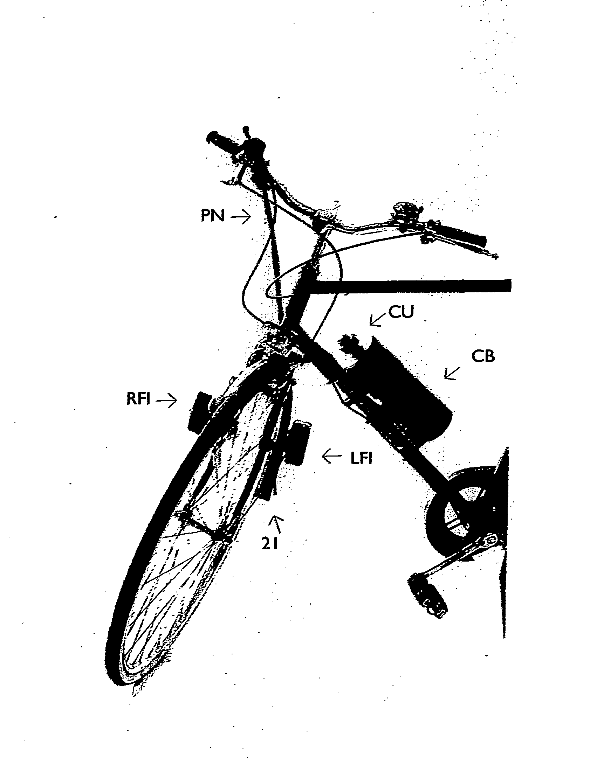

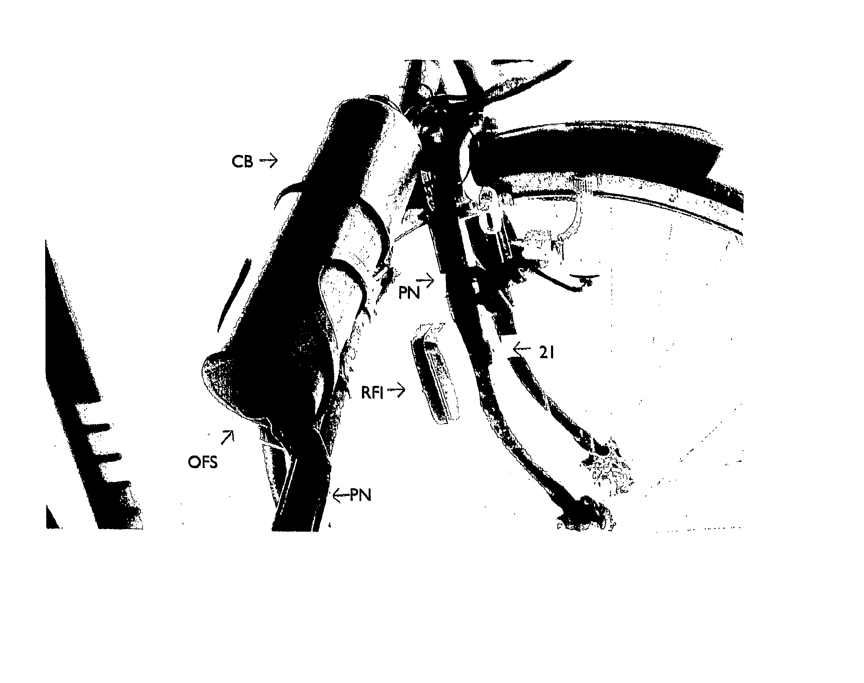

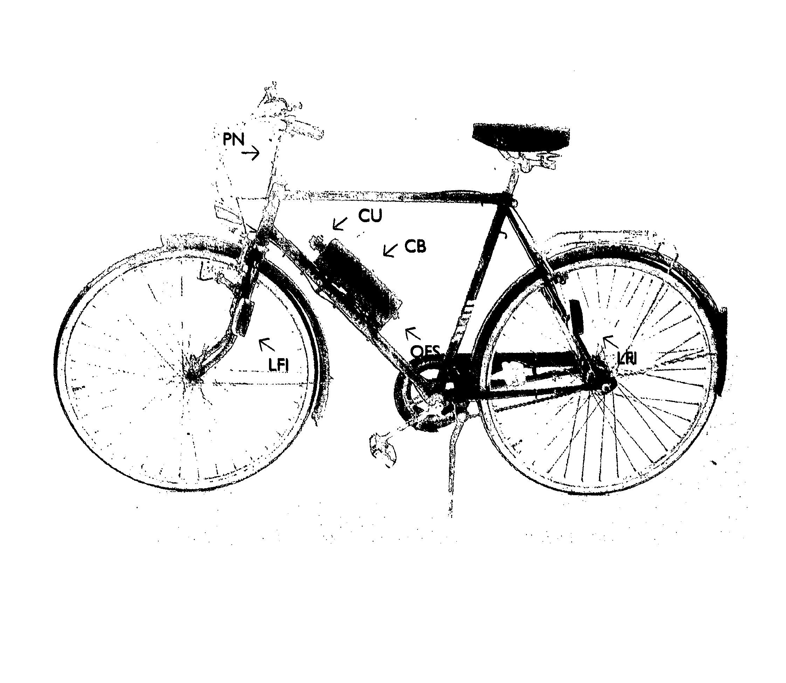

## Claims

1. Illuminight indicators comprising of 12 volt rechargeable battery, charging unit, flashing unit and on and off switch which are all connected by a wiring system contained in a control box which is secured to the frame of the bicycle.

2. Illuminight indicators device as claimed in claim 1. The contents of the control box operate the indicators via a wiring system which extends outwards to each indicator and the indicator switch, the indicator switch is situated on the handle bar of the bicycle next to the hand grip. By pressing this switch left or right decides which direction the cyclist is taking.

3. There are four indicators on the bicycle, two at the front and two at the rear;
they are secured to the fork of the bicycle either side of the front and rear wheel By bracket which is extended outwards to give clear indication which direction the cyclist is taking when in flashing mode.
